# EUROPEAN PATENT APPLICATION

(11) **EP 1 892 022 A2**
(43) Date of publication of application: **27.02.2008**
(21) Application number: 07111738.6
(22) Date of filing: 04.07.2007
(51) Int. Cl.: A63F 13/10

(54) **Method and device for controlling collision model in virtual space**

(30) Priority: 22.08.2006 JP 2006225885
(71) Applicant: Kabushiki Kaisha Sega doing business as Sega Corporation, Tokyo 144-8531 (JP)
(72) Inventor: Numazawa, Takeshi, Tokyo 144-8531 Tokyo (JP); Furuichi, Norio, Tokyo 144-8531 Tokyo (JP)
(74) Representative: Fleuchaus, Michael A.

(57) **Abstract**

An object of the present invention is to provide a player with a sense of strategy in addition to footwork. When a ball ejected from a ball dispensing machine is hit toward a balloon by manipulating a racket held by an object such that the ball collides with the balloon during a process for varying the object, the ball, and the balloon within a three-dimensional virtual space, the ball rebounds in the direction of an arrow attached to the balloon.

## Description

### BACKGROUND OF THE INVENTION

### Field of the Invention

The present invention relates to a method and device for controlling a collision model in a virtual space in order to control the rebound of a first model when the first model collides with a second model during a process in which a plurality of models change visibly within a three-dimensional virtual space on the basis of a predetermined program, as well as a recording medium and a gaming machine on which the method for controlling a collision model in a virtual space is recorded.

### Description of Related Art

As a result of recent developments in computer graphics technology, simulation devices and gaming devices have become widespread in both homes and offices.

The screens of this type of device include background screens and objects that move on the background screen in accordance with a computer program or instructions from a controller so as to execute changes and operations within the context of a game.

At this time, depending on the content of the game, it may be necessary to display various information, such as rule explanations, operation explanations, point accumulation and results, and a life gauge or the like in cases where the operations of an object are limited or the like, in the form of alphabetic characters and symbols. In this case, a display area is provided in a location such as the upper portion or corner of the screen. By displaying the various alphabetic character and symbol information in this display area, overlap with an object can be prevented, and the background screen can be partitioned precisely so that the information can be displayed clearly (Japanese Patent Laid-open Publication No. 2003-6675).

Meanwhile, the objects in the game typically obtain points and win or lose the game as a result of various actions, and these actions consist of normal actions and special actions (so-called secret techniques or tricks) used at crunch points in the game.

### SUMMARY OF THE INVENTION

However, when a game such as squash is played on a conventional gaming machine and a player performs an operation to hit a ball such that the ball hits a target, the ball rebounds off the target in a uniform manner, and as a result, the player is not provided with a sufficient sense of strategy in addition to footwork.

The present invention has been designed in consideration of the problems in the prior art, and it is an object thereof to provide a player with a sense of strategy in addition to footwork.

To achieve this object, the present invention is a method of controlling a collision model in a virtual space, in which a rebound of a first model is controlled when the first model collides with a second model during a process in which a plurality of models change visibly within a three-dimensional virtual space on the basis of a predetermined program, the method comprising the steps of: setting a rebound parameter in the second model when the first model collides with and rebounds from the second model; and causing the first model to rebound on the basis of the parameter.

When this method of controlling a collision model in a virtual space is employed, a display body based on the parameter may be attached to the second model, and the display mode of the display body attached to the second model may be varied continuously. Further, a plurality of models having different display bodies may be used as the second model, the plurality of second models may be disposed in disparate positions in accordance with position information, and the parameter relating to the second model may be set in association with a difficulty level. Further, the parameter relating to the second model may be set in association with any of a rebound direction of the first model, a rebound speed of the first model, and a target falling point of the first model.

The present invention also employs a method of controlling a character in a virtual space, comprising the steps of: using a field of the virtual space as a movement area; disposing player characters manipulated respectively by a plurality of participating players on the field; displaying a hitting order of the first model on each of the player characters sequentially; receiving sequentially a swing input relating to each of the player characters in accordance with the hitting order and receiving a movement input relating to all of the player characters in response to an operation performed by the plurality of participating players, while ignoring reception of a swing input that does not follow the hitting order; and executing a swing for hitting the first model sequentially in relation to the player character for which the swing input is received.

The present invention is also a device for controlling a collision model in a virtual space, which controls a rebound of a first model when the first model collides with a second model during a process in which a plurality of models change visibly within a three-dimensional virtual space on the basis of a predetermined program, and comprises: parameter setting means for setting a rebound parameter in the second model when the first model collides with and rebounds from the second model; and first model controlling means for causing the first model to rebound on the basis of the parameter set by the parameter setting means.

When this device for controlling a collision model in a virtual space is provided, a display body based on the parameter may be attached to the second model, and a display body having a display mode that varies continuously may be attached to the second model. Further, a plurality of models having different display bodies may be used as the second model, and the plurality of second models may be disposed in disparate positions in accordance with position information. Further, the parameter relating to the second model may be set in association with a difficulty level by the parameter setting means, and the parameter relating to the second model may be set in association with any of a rebound direction of the first model, a rebound speed of the first model, and a target falling point of the first model.

Further, a program for realizing any one of the aforementioned methods of controlling a collision model in a virtual space or a recording medium recorded therewith may be provided, and a gaming machine programmed in advance with any one of the aforementioned methods of controlling a collision model in a virtual space may be provided.

The present invention is also a device for controlling a character in a virtual space, which controls player characters that are disposed on a field of the virtual space serving as a movement area and manipulated respectively by a plurality of participating players, and comprises: display means for displaying a hitting order of the first model on each of the player characters sequentially; operation input receiving means for receiving sequentially a swing input relating to each of the player characters in accordance with the hitting order and receiving a movement input relating to all of the player characters in response to an operation performed by the plurality of participating players, while ignoring reception of a swing input that does not follow the hitting order; player swing operation controlling means for executing a swing for hitting the first model sequentially in relation to the player character for which the swing input is received by the operation input receiving means; and player movement controlling means for controlling movement of the player character for which the movement input is received by the operation input receiving means.

According to the present invention, when the first model collides with and rebounds from the second model, a rebound parameter is set in the second model, and the first model rebounds on the basis of the set parameter. Hence, when a ball serving as the first model collides with a balloon serving as the second model, for example, the ball serving as the first model rebounds from the balloon serving as the second model forcefully when hit forcefully, and weakly when hit weakly. As a result, the player can be provided with a sense that strategy is required in addition to footwork, and can therefore take a greater interest in the game.

According to the present invention, the player is provided with a sense that strategy is required in addition to footwork, and as a result, the player can take a greater interest in the game.

### BRIEF DESCRIPTION OF THE DRAWINGS

Fig. 1 is a constitutional diagram of a gaming device programmed with a method of controlling a collision model in a virtual space according to the present invention;
Fig. 2 is a view illustrating a gaming method of a panic balloon game;
Fig. 3 is a flowchart illustrating an action of the panic balloon game;
Fig. 4 is a view showing a display example of a balloon clear bonus;
Fig. 5 is a view illustrating a balloon re-supplying method;
Fig. 6A is a view illustrating the constitution of another example of a balloon;
Fig. 6B is a view illustrating the constitution of another example of a balloon;
Fig. 7 is a view showing a display example of a party panic balloon game;
Fig. 8 is a flowchart illustrating an action of the party panic balloon game; and
Fig. 9 is a view illustrating a relationship between a reference vector and a final vector.

### DETAILED DESCRIPTION OF PREFERRED EMBODIMENT

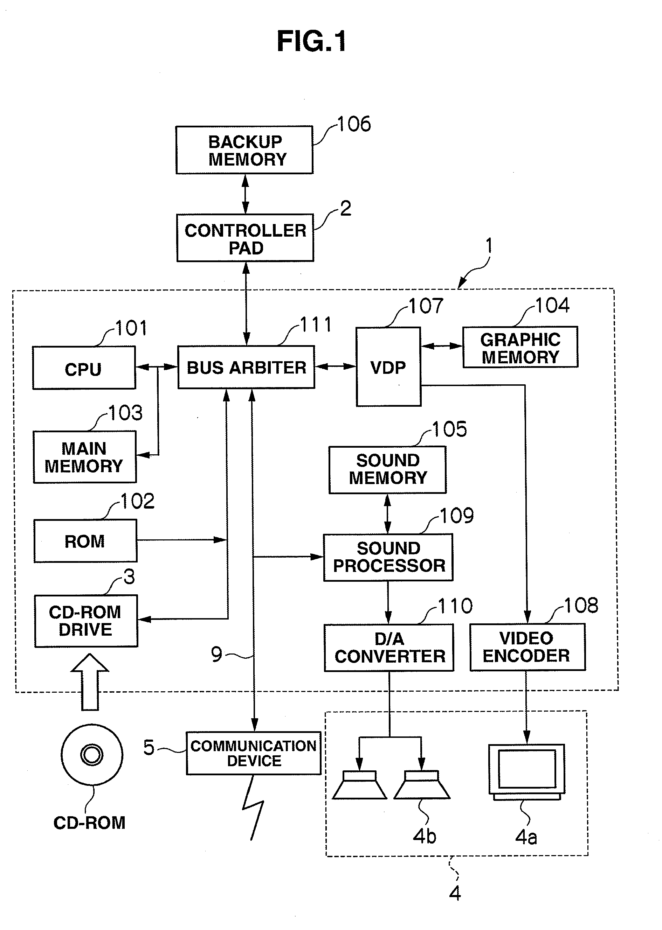

Fig. 1 shows the constitution of a gaming device programmed with a method of controlling a collision model in a virtual space according to the present invention. In Fig. 1, the gaming device comprises a control unit 1 centered on a CPU 101 and the like, an input device 2 used by a player to input an operation signal, an external storage device 3 storing an operating system (referred to as "OS" hereafter), an application program (game program), and so on, for inputting these programs to the control unit 1 as required, and an output device 4 constituted by a display device 4a, a speaker 4b, and so on for providing the player with images and sound. A communication device 5 is also provided for transmitting and receiving data to and from another computer or gaming device over a telephone line or the like. Note that the external storage device 3 is not limited to the illustrated CD-ROM and so on, and may be any recording medium or the like on which data from the control unit 1 can be written and held.

When power is supplied to start the game, a boot program loader, not shown in the drawing, loads a boot program (also known as an initial program) stored in a ROM 102 to the CPU 101, and the CPU 101 executes the boot program. In accordance with the boot program, the CPU 101 loads all or a required part of the OS stored on the CD-ROM or the like to a main memory 103, whereby the OS is executed.

Under the control of the OS, the CPU 101 loads all or a required part of the application program (also referred to hereafter simply as "the program") stored on the CD-ROM or the like to the main memory 103, and where necessary, loads rendering data and image data stored on the CD-ROM or the like to a graphic memory 104 and loads sound data to a sound memory 105.

Under the control of the OS, the CPU 101 executes the application program stored in the main memory 103. Data generated upon execution of the application program are written to the main memory 103 or a backup memory 106 and referred to as required. The backup memory 106 stores data for maintaining a current state when the power is cut due to cessation of the game or the like.

Note that in this embodiment, the OS, application program, and so on are provided by the CD-ROM, but these programs and so on may be provided from a ROM or from another computer via a network, for example.

A video display processor (VDP) 107 reads image data required for an image display, which are stored in the graphic memory 104, and generates image data by performing various types of information processing (image processing) on the basis of commands and data from the CPU 101 upon execution of the application program. Examples of the various types of image processing include texture mapping, light source processing, display priority processing, and so on. The VDP 107 then outputs the generated image data to an encoder 108 to display the generated image data on the display screen 4a. Note that the generated image data may be written to a frame buffer memory or the like, for example, and read from the frame buffer memory at a predetermined timing.

A sound processor 109 reads the sound data stored in the sound memory 105 and performs various types of information processing (sound processing) on the basis of commands and data from the CPU 101 upon execution of the application program. Examples of the various types of sound processing include effect processing, mixing processing, and so on. Having been subjected to the various types of sound processing, the sound data are converted into analog data by a D/A converter 110 and output to the speaker.

A bus arbiter 111 performs control between various units connected via a data transmission line (a bus or the like) 9. For example, to determine the units occupying the bus, the bus arbiter 111 determines an order of precedence among the units and allocates a bus occupancy period to the occupying units.

The gaming device of the present invention, which is constituted as described above, realizes predetermined functions of the present invention by having the CPU 101 execute programs read from an external storage device such as a CD-ROM.

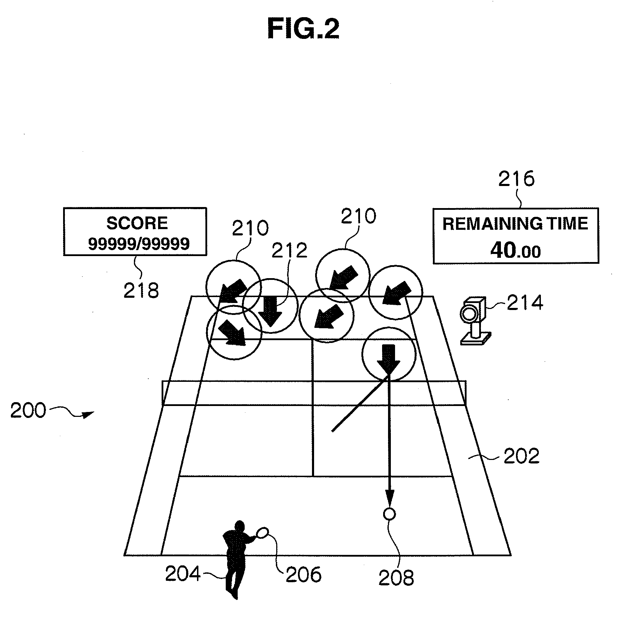

As shown in Fig. 2, for example, the gaming device displays images within a three-dimensional virtual space on a screen 200, and the three-dimensional images on the screen 200 are largely divided into a background screen 202 and an object image (to be referred to simply as "object" hereafter) 204 that performs movements or operations on the basis of player operations. The background screen 202 corresponds to outer space, and displays a recreation room from various viewpoints.

In the game, the object 204 serving as the main character enters the recreation room and swings a racket 206 held thereby to hit a ball 208 at a plurality of balloons 210. When the ball 208 collides with one of the balloons 210, the balloon 210 hit by the ball 208 is destroyed and the ball 208 rebounds off the balloon 210 hit thereby on the basis of a parameter set in the balloon 210. In other words, when the ball 208 collides with the balloon 210 during a process in which a plurality of models, i.e. the ball 208 and the balloon 210, change visibly within a three-dimensional virtual space in accordance with a predetermined program, the ball 208 rebounds off the balloon 210 with which it collides and the balloon 210 struck by the ball 208 is destroyed (burst).

At this time, when the balloon 210 is struck forcefully by the ball 208, the ball 208 rebounds forcefully, and when the balloon 210 is struck weakly by the ball 208, the ball 208 rebounds weakly, and therefore the player senses a need to incorporate strategy into the game as well as footwork. An arrow 212 serving as a display body is set in each balloon 210 in accordance with the parameter, and the display mode of the arrow 212 can be varied continuously.

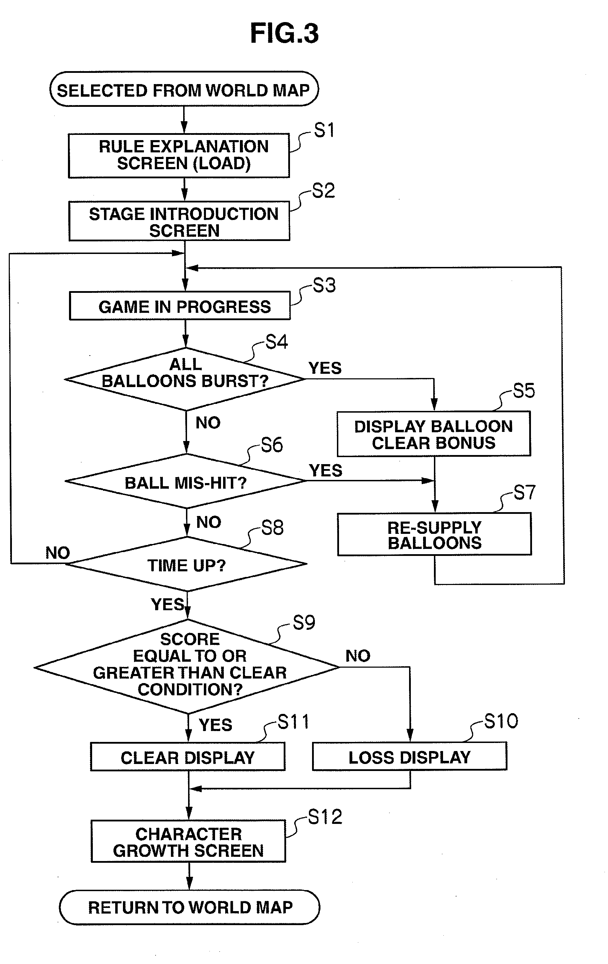

As shown in Fig. 3, at the start of the game, when the player selects a world map, a rule explanation screen is loaded (S1), and a stage introduction screen is displayed on the screen of the display device 4a (S2). Then, when the game is begun by a user operation, the ball 208 is ejected from a ball dispensing machine 214. When the ball 208 is struck by the racket 206 in response to a player operation, the ball 208 is returned toward one of the balloons 210.

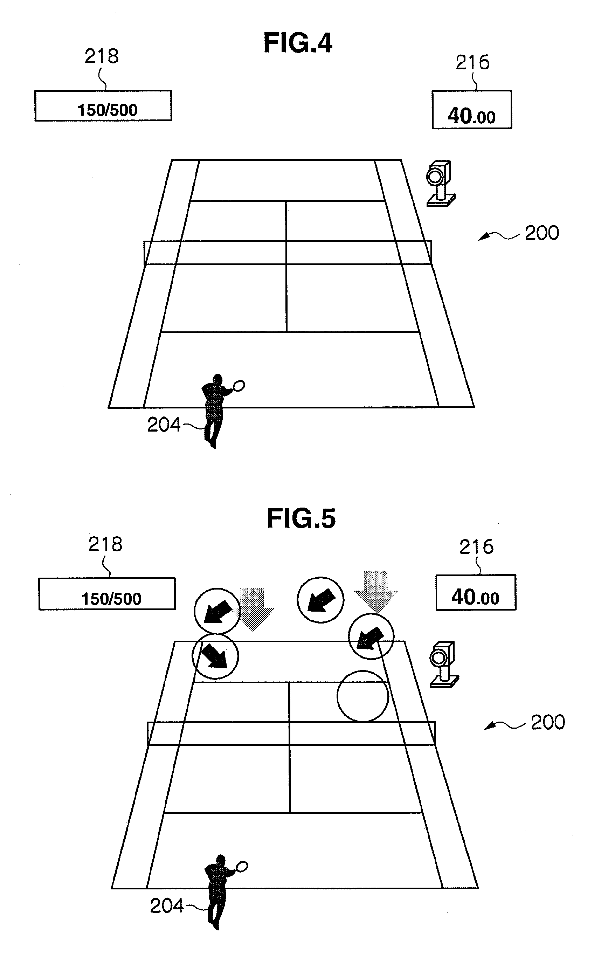

When the ball 208 collides with one of the plurality of balloons 210, the struck balloon 210 bursts and the ball 208 rebounds from the struck balloon 210 in the direction of the arrow 212. Thereafter, the game proceeds as the player performs the operation to return the rebounding ball 208 using the racket 206 repeatedly (S3). When all of the balloons 210 are destroyed in the course of the game (S4), a balloon clear bonus is displayed, as shown in Fig. 4 (S5). In this case, a score of 100 points is received when one balloon 210 is burst, and if the balloons 210 continue to be burst without missing, the score increases by 10 points per balloon until the score reaches 150 points. When all of the balloons 210 on the court are burst, a bonus score of 800 points is received.

When the ball 208 strikes the balloons 210 in the course of the game, all of the balloons 210 struck by the ball 208 burst and the ball 208 rebounds in the direction of the arrow 212. At this time, when the ball 208 is fast, it rebounds quickly, and when the ball 208 is slow, it rebounds slowly. When the number of balloons 210 becomes small during the course of the game or the player mis-hits the ball 208 (S6), the ball 208 is re-supplied by the ball dispensing machine 214, as shown in Fig. 5 (S7).

When a remaining time 216 displayed on the screen reaches zero during the course of the game such that the playing time ends (S8), the value of a score 218 on the screen is calculated and a determination is made as to whether or not the score is equal to or greater than a fixed clear condition. When the value of the score 218 does not satisfy the fixed clear condition at this time, a "loss" display is displayed (S9, S10), and when the value of the score 218 is equal to or greater than the fixed clear condition, a "clear" display is displayed (S11) and a character growth screen is displayed (S12). The display then returns to the world map, and the processing of this routine is terminated.

When re-supplying the balloons 210, the time and sequence are temporarily stopped before re-supply of the balloons 210 begins. In this case, the balloons 210 are re-supplied such that the number of balloons 210 on the court is always fixed. The balloons 210 are re-supplied so as to fall from the top of the court (from the exterior of the screen), and when the balloons 210 contact the court, the game resumes.

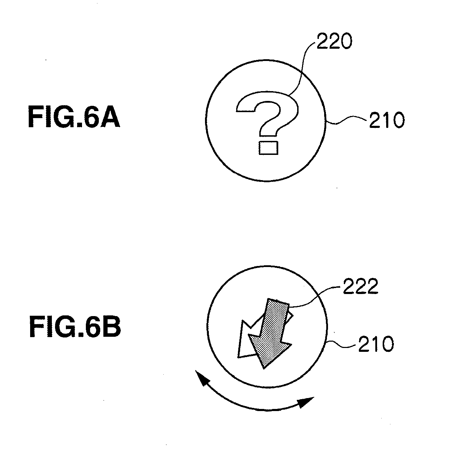

Further, as shown in Fig. 6A and Fig.6B, a question mark 220 or an arrow 222 having a constantly moving display mode may be attached to the balloon 210 as a display body. When the question mark 220 is attached to the balloon 210, this indicates that when the ball 208 collides with the balloon 210, the rebound direction is not fixed. When the arrow 222 is attached to the balloon 210, the arrow 222 rotates or oscillates within a fixed angular range such that when the ball 208 collides with the balloon 210, the rebound direction of the ball 208 is determined by the orientation of the arrow 222 at that time.

Further, a parameter relating to the rebound direction, rebound speed, or target falling point of the ball 208 may be set in relation to each balloon 210 in association with a plurality of difficulty levels. For example, difficulty levels are set from level 1 to level 6, and at level 1, the angles of the arrows 212 are all set to be substantially straight. In this case, the quality is considerably low. At level 2, the quality is higher than that of level 1, and at level 3, which is directed at intermediate-level players, as opposed to level 2, which is directed at beginners, the level of difficulty is increased by increasing the angles of the arrows 212 to be higher than those of level 2.

At level 4, which is directed at skilled players, the level of difficulty is increased in accordance with the type of balloon 210. At level 5, which can only be cleared by players who have mastered the game, the number of balloons 210 is smaller than that of level 4, and a high degree of shot control is required. At level 6, which is provided for fanatics of the game, the angles 212 are set at cruel angles with a high difficulty level, and the number of special balloons 210 is set to be high.

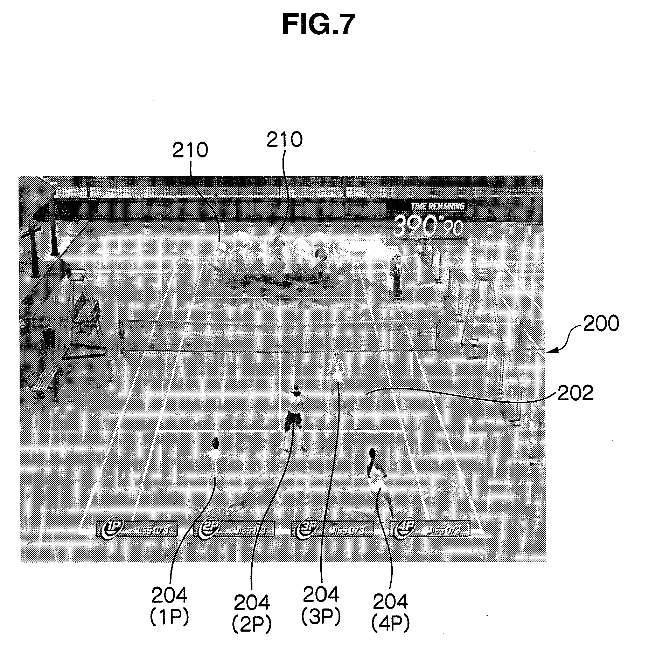

Next, when playing a party panic balloon game, four objects 204 are provided, as shown in Fig. 7, for example. In this game, the objects 204, corresponding to four players, are scattered over the court and hit the ball 208 at the balloons 210 in sequence. A player who makes three mis-hits is eliminated from the game, and the final remaining player is the winner.

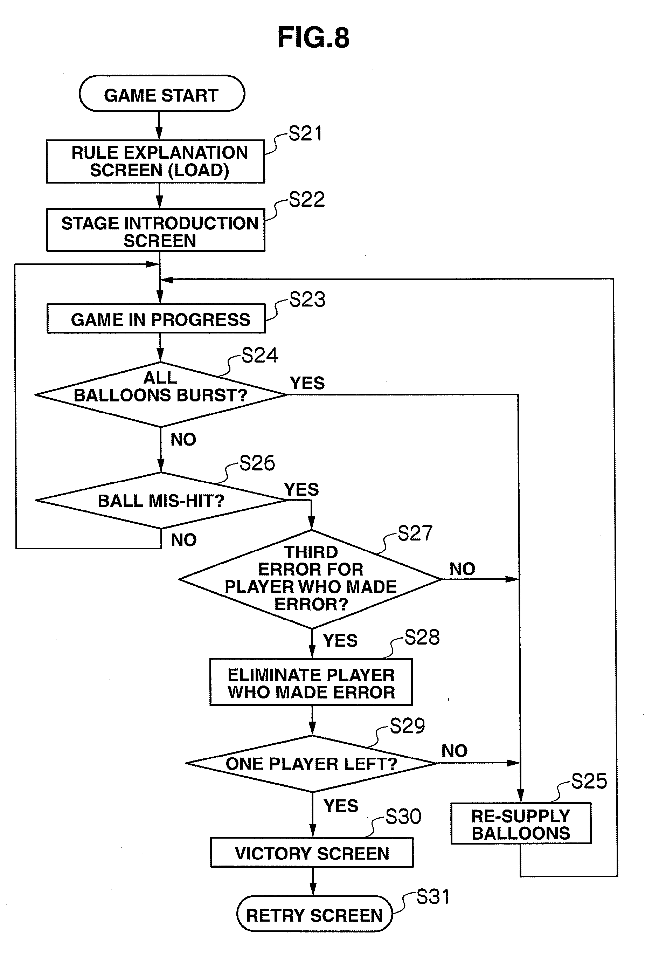

More specifically, as shown in Fig. 8, when the game begins, the rule explanation screen is displayed on the screen of the display device 4a (S21), after which the stage introduction screen is displayed (S22). Then, the ball 208 is ejected from the ball dispensing machine 214, and the four players manipulate the objects 204 in turn to return the ball 208 toward one of the balloons 210. As a result, the balloons 210 are burst one by one, and thus the game progresses (S23). When all of the balloons 210 have been burst in the course of the game (S24), the balloons 210 are re-supplied (S25).

On the other hand, when one of the players makes a mis-hit during the game, the error is counted (S26), and a determination is made as to whether or not the number of errors made by the player is three (S27). When the number of errors made by the player is three or more, the player who made the error is eliminated (S28), and the game is continued by the remaining players. The balloons 210 are re-supplied until three of the four players have been eliminated and only one player remains, and when only one player remains (S29), the remaining player is displayed as the winner (S30) and a retry screen is displayed (S31). The processing of this routine is then terminated.

Similarly to the mini-game, in the party panic balloon game, a parameter corresponding to the level of difficulty may be set in relation to each balloon 210. For example, level 3 and level 4 of the mini-game may be set to appear at random, level 5 may be set to appear when all of the balloons 210 have been cleared, and level 6 may be set to appear when the balloons 210 have been cleared three times. Further, when a player makes a mis-hit, text indicating the error may be displayed on the object 204 corresponding to the player who made the error.

Further, in the embodiments described above, when setting the parameter in the balloon 210, the arrow 212, the question mark 220, and the left-right rotating arrow 222 may be attached to the balloon 212 as the parameter 210. Moreover, the rebound speed of the ball 208 may be set in accordance with the speed at which the ball 208 strikes the balloon 210, the amount of topspin (forward direction) applied to the ball 208 may be increased as the speed at which the ball 208 strikes the balloon 210 increases, and the speed at which the ball 208 lands on a target landing point may be set.

Further, when setting the parameter in the balloon 210, a lob property may be set whereby the manner in which the ball 208 rebounds is different to that of a normal balloon 210 in that the ball 208 follows a high lob trajectory. Moreover, a dropping property may be set whereby the manner in which the ball 208 rebounds is different to that of a normal balloon 210 in that the ball 208 follows a drop-shot trajectory and falls into the front part of the court.

Further, a skipping property may be attached to the balloon 210 such that the player due to hit the ball 208 next is skipped. For example, when the game is played by player 1, player 2, player 3 and player 4, normally the ball 208 is hit in order of player 1 → player 2 → player 3 → player 4 → player 1, but when the ball hit by player 1 strikes the balloon 210 to which the skipping property has been attached, player 2 may be skipped as the player due to hit the ball next, and instead, the ball may be hit by player 3.

Further, a reverse property may be attached such that when the ball 208 strikes the balloon 210 having this property, the order of the players due to hit the ball 208 next is reversed. When the game is played by player 1, player 2, player 3 and player 4, normally the ball 208 is hit in order of player 1 → player 2 → player 3 → player 4 → player 1, but when the ball 208 strikes the balloon 210 having the reverse property, the order changes to player 4 → player 3 → player 2 → player 1 → player 4. For example, when player 1 hits the balloon 210 having this property with the ball 208, the player who hits the ball 208 next is not player 2, but player 4, according to the reverse order.

Further, the appearance position of the balloons 210 may be set in advance on the basis of position information, or the appearance position of each balloon 210 may be set at random. In this case, the appearance position of each balloon 210 may be set in accordance with the difficulty level.

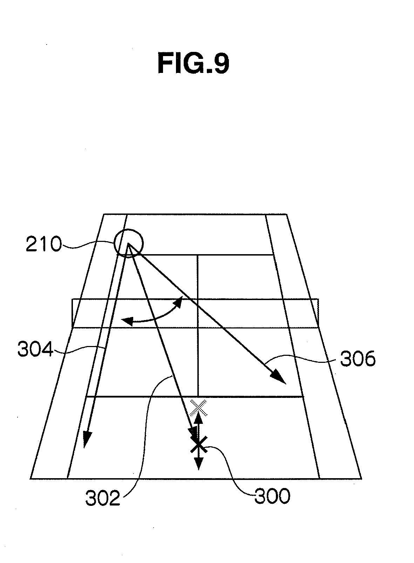

Next, as shown in Fig. 9, when attaching the arrow 212 or question mark 220 to the balloon 210, a basic direction is set as the central direction of the opposite court, and the magnitude of the angle to the left and right of this position or the distance from this position is determined in accordance with the difficulty level.

To create a central vector, first a reference position 300 is determined. In this case, the left-right direction and the front-back direction are varied at random in accordance with the difficulty level by a maximum width of ±25%, using the center of the court as a reference in relation to the left-right direction, and a position of 75% of the distance from the net to the end of the court as a reference in relation to the front-back direction. At the lowest difficulty level, the reference position 300 is fixed at the 75% position, and at the highest difficulty level, the reference position 300 is set at random in any position between 50% and 100%.

Next, a straight line connecting the balloon 210 to the reference position 300 is set as a reference vector 302. Next, the reference vector 302 is rotated in a positive or negative direction according to the difficulty level. Rotation in the positive or negative direction is completely random, and the rotation angle is obtained by multiplying a reference of 0 degrees at the lowest difficulty level and 18 degrees at the highest difficulty level by a random number between 90% and 110%. The final target is set at a location obtained by adding a random number between a height of 0m and 1 m to a position obtained by adding a final vector 304, 306 to the position of the balloon 210. Thus, the ball 208, after rebounding from the balloon 210, flies so as to pass through the target while falling without bouncing.

Further, when determining the direction of the arrow 222, the distance to the final target and the height of the final target are maintained. The arrow 222 is rotated along a sine curve so as to move in a rotation period of sin (π) per six seconds.

Note that since the initial angle is determined by a random number, the initial angle starts from disparate directions. The rotation angle of the arrow 222 is set within a range specified in advance, which is between 30 and 35 degrees in party mode. When creating the final target, the rotation component of the arrow 222 is set as limiting speed x period (t), and the target is created by rotating the vector using the central direction of the court as a target. According to this embodiment, when the ball 208 collides with one of the balloons 210 and rebounds, the ball 208 rebounds on the basis of the parameter set in the balloon 210 such that when the ball 208 is hit forcefully, it rebounds forcefully, and when the ball 208 is hit weakly, it rebounds weakly, for example. Hence, the player is provided with a sense that strategy is required in addition to footwork, and can therefore take a greater interest in the game.

Furthermore, in this embodiment, a method of controlling a character in a virtual space may be employed. In this method, the field (court) of the virtual space is used as a movement area, the player characters (objects 204) that are manipulated respectively by the plurality of participating players (1 p to 4p) are disposed on the field, a hitting order of a first model (the ball 208) is displayed on each player character sequentially, a swing input relating to each player character is received in accordance with the hitting order and a movement input relating to all of the player characters is received in response to an operation performed by the plurality of participating players, while reception of a swing input that does not follow the hitting order is ignored, and a swing for hitting the first model is executed sequentially in relation to the player character for which the swing input is received.

In this case, a device for controlling a character in a virtual space controls the player characters that are disposed on the field of the virtual space, which serves as the movement area, and manipulated respectively by the plurality of participating players, and comprises: display means for displaying the hitting order of the first model on each of the player characters sequentially; operation input receiving means for receiving the swing input relating to each of the player characters in accordance with the hitting order and receiving the movement input relating to all of the player characters in response to the operation performed by the plurality of participating players, while ignoring reception of a swing input that does not follow the hitting order; player swing operation controlling means for executing a swing for hitting the first model sequentially in relation to the player character for which the swing input is received by the operation input receiving means; and player movement controlling means for controlling movement of the player character for which the movement input is received by the operation input receiving means.

## Claims

1. A method of controlling a collision model in a virtual space, in which a rebound of a first model is controlled when said first model collides with a second model during a process in which a plurality of models change visibly within a three-dimensional virtual space on the basis of a predetermined program, said method comprising the steps of:
setting a rebound parameter in said second model when said first model collides with and rebounds from said second model; and
causing said first model to rebound on the basis of said parameter.

2. The method of controlling a collision model in a virtual space according to claim 1, wherein a display body based on said parameter is attached to said second model.

3. The method of controlling a collision model in a virtual space according to claim 2, wherein a display mode of said display body attached to said second model is varied continuously.

4. The method of controlling a collision model in a virtual space according to claim 2 or claim 3, wherein a plurality of models having different display bodies are used as said second model, and said plurality of second models are disposed in disparate positions in accordance with position information.

5. The method of controlling a collision model in a virtual space according to any one of claim 1 through claim 4, wherein said parameter relating to said second model is set in association with a difficulty level.

6. The method of controlling a collision model in a virtual space according to any one of claim 1 through claim 5, wherein said parameter relating to said second model is set in association with any of a rebound direction of said first model, a rebound speed of said first model, and a target falling point of said first model.

7. A method of controlling a character in a virtual space, comprising the steps of:
using a field of said virtual space as a movement area;
disposing player characters manipulated respectively by a plurality of participating players on said field;
displaying a hitting order of said first model on each of said player characters sequentially;
receiving sequentially a swing input relating to each of said player characters in accordance with said hitting order and receiving a movement input relating to all of said player characters in response to an operation performed by said plurality of participating players, while ignoring reception of a swing input that does not follow said hitting order; and
executing a swing for hitting said first model sequentially in relation to said player character for which said swing input is received.

8. A device for controlling a collision model in a virtual space, which controls a rebound of a first model when said first model collides with a second model during a process in which a plurality of models change visibly within a three-dimensional virtual space on the basis of a predetermined program, and comprises:
parameter setting means for setting a rebound parameter in said second model when said first model collides with and rebounds from said second model; and
first model controlling means for causing said first model to rebound on the basis of said parameter set by said parameter setting means.

9. The device for controlling a collision model in a virtual space according to claim 8, wherein a display body based on said parameter is attached to said second model.

10. The device for controlling a collision model in a virtual space according to claim 9, wherein a display mode of said display body attached to said second model is varied continuously.

11. The device for controlling a collision model in a virtual space according to claim 9 or claim 10, wherein a plurality of models having different display bodies are used as said second model, and said plurality of second models are disposed in disparate positions in accordance with position information.

12. The device for controlling a collision model in a virtual space according to any one of claim 8 through claim 11, wherein said parameter setting means set said parameter relating to said second model in association with a difficulty level.

13. The device for controlling a collision model in a virtual space according to any one of claim 8 through claim 12, wherein said parameter setting means set said parameter relating to said second model in association with any of a rebound direction of said first model, a rebound speed of said first model, and a target falling point of said first model.

14. A device for controlling a character in a virtual space, which controls player characters that are disposed on a field of said virtual space serving as a movement area and manipulated respectively by a plurality of participating players, and comprises:
display means for displaying a hitting order of said first model on each of said player characters sequentially;
operation input receiving means for receiving sequentially a swing input relating to each of said player characters in accordance with said hitting order and receiving a movement input relating to all of said player characters in response to an operation performed by said plurality of participating players, while ignoring reception of a swing input that does not follow said hitting order;
player swing operation controlling means for executing a swing for hitting said first model sequentially in relation to said player character for which said swing input is received by said operation input receiving means; and
player movement controlling means for controlling movement of said player character for which said movement input is received by said operation input receiving means.

15. A program for realizing the method of controlling a collision model in a virtual space according to any one of claim 1 through claim 6 on a computer, or a recording medium recorded therewith.

16. A program for realizing the method of controlling a character in a virtual space according to claim 7 on a computer, or a recording medium recorded therewith.

17. A gaming machine programmed in advance with the method of controlling a collision model in a virtual space according to any one of claim 1 through claim 6.

18. A gaming machine programmed in advance with the method of controlling a character in a virtual space according to claim 7.
